# EUROPÄISCHE PATENTSCHRIFT

(11) **EP 1 555 203 B1**
(45) Veröffentlichungstag und Bekanntmachung des Hinweises auf die Patenterteilung: **26.04.2006**
(21) Anmeldenummer: 05000098.3
(22) Anmeldetag: 05.01.2005
(51) Int. Cl.: B63G 8/38

(54) **Optisches Einrichtung für den Einsatz unter stark wechselndem Umgebungsdruck**
Optic arrangement for use under important changes of the environmental pressure
Arrangement optique pour utilisation lors de changements importants de la pression environnante

(30) Priorität: 13.01.2004 DE 102004001948
(43) Veröffentlichungstag der Anmeldung: 20.07.2005
(73) Patentinhaber: Carl Zeiss Optronics GmbH, 73447 Oberkochen (DE)
(72) Erfinder: Weisser, Dirk, 76351 Linkenheim (DE); Tietz, Traugott, 73432 Aalen (DE)
(74) Vertreter: Cohausz & Florack

(56) Entgegenhaltungen:
- EP-A- 0 582 332
- EP-A- 1 177 974
- GB-A- 129 707
- GB-A- 2 012 217
- US-A- 867 982

## Beschreibung

Die vorliegende Erfindung betrifft eine optische Einrichtung für den Einsatz unter stark wechselndem Umgebungsdruck, insbesondere für ein Sehrohr oder einen Optronikmast, mit einem Gehäuse; einem ersten Bereich, in dem ein lichtdurchlässiges Element im Bereich einer Ausnehmung des Gehäuses angeordnet ist, und einer einen ersten Dichtspalt zwischen dem lichtdurchlässigen Element und dem Gehäuse abdichtenden ersten Dichtungseinrichtung, die zum Abdichten des Innenraumes des Gehäuses gegenüber der Umgebung des Gehäuses bis zu einem ersten Druckniveau ausgebifdet ist.

Bei herkömmlichen Sehrohren oder Optronikmasten für U-Boote (siehe zum Beispiel Dokument GB 129707 müssen die Scheiben, durch die das Licht fällt, und die zugehörige Abdichtung des Gehäuses in jeder Situation dem Umgebungsdruck standhalten. Dies bedingt angesichts des hohen Umgebungsdrucks bei Tauchfahrt, dass zum einen die Abdichtung vergleichsweise aufwändig ausgeführt sein muss und zum anderen die Scheiben selbst vergleichsweise dick und damit aufwändig gestaltet sein müssen, um diesem hohen Druck standzuhalten. Hierdurch ergibt sich nicht nur eine vergleichsweise teure, schwere und groß bauende Anordnung. Die erforderliche große Dicke der Scheiben wirkt sich durch die damit einhergehende Absorption sowie die damit einhergehenden Abbildungsfehler negativ auf die optische Leistung des Gesamtsystems aus. Das Problem der Dicke der Scheiben wurde bereits durch die Einrichtung gemäß Dokument GB 2 012 217 gelöst. Diese bekannte Lösung ist jedoch recht aufwändig.

Der vorliegenden Erfindung liegt daher die Aufgabe zu Grunde, eine optische Einrichtung der eingangs genannten Art zur Verfügung zu stellen, welche die oben genannten Nachteile nicht oder zumindest in geringerem Maße aufweist und insbesondere bei verringertem Aufwand eine verbesserte optische Leistung des Gesamtsystems ermöglicht.

Die vorliegende Erfindung löst diese Aufgabe ausgehend von einer optischen Einrichtung gemäß dem Oberbegriff des Anspruchs 1 durch die im kennzeichnenden Teil des Anspruchs 1 angegebenen Merkmale.

Der vorliegenden Erfindung liegt die technische Lehre zu Grunde, dass man eine verbesserte optische Leistung des Gesamtsystems bei insgesamt verringertem Aufwand erzielen kann, wenn eine von einer ersten Funktionsstellung in eine zweite Funktionsstellung bewegliche Schutzeinrichtung vorgesehen ist, die außerhalb des Gehäuses angeordnet ist. In ihrer ersten Funktionsstellung deckt die Schutzeinrichtung den ersten Bereich derart dichtend gegenüber der Umgebung des Gehäuses ab, dass bei einem Umgebungsdruck oberhalb des ersten Druckniveaus in einem Zwischenraum zwischen der Schutzeinrichtung und dem ersten Bereich höchstens das erste Druckniveau vorherrscht. In ihrer zweiten Funktionsstellung gibt die Schutzeinrichtung das lichtdurchlässige Element frei.

Hierdurch wird in vorteilhafter Weise erreicht, dass sowohl das lichtdurchlässige Element als auch die erste Dichtungseinrichtung nur für ein vergleichsweise geringes erstes Druckniveau ausgelegt werden müssen, da sie durch die Schutzeinrichtung vor höheren Umgebungsdrücken geschützt sind. Das lichtdurchlässige Element, beispielsweise eine ebene oder gewölbte Scheibe oder eine Linse, kann dann entsprechend dünn ausgeführt werden. Hierdurch sinken zum einen die Material- und Herstellungskosten das lichtdurchlässige Element. Zum anderen erhöht sich hierdurch der optische Leistung des Gesamtsystems, da es infolge der geringeren Dicke des lichtdurchlässigen Elements zu geringeren Absorptionsverlusten und Abbildungsfehlern kommt.

Die erfindungsgemäße optische Einrichtung lässt sich überall dort in vorteilhafter Weise einsetzen, wo der Lichteinfall durch das lichtdurchlässige Element in das Gehäuseinnere nur bei vergleichsweise geringen Umgebungsdrücken erforderlich ist. Dies ist beispielsweise bei Sehrohren oder Optronikmasten für Unterseeboote der Fall. Deren optische Funktionen, beispielsweise das Hindurchsehen, werden in der Regel nur benötigt, wenn sich das betreffende Ende über dem Wasserspiegel befindet. Bei Tauchfahrt mit eingefahrenem Sehrohr bzw. Optronikmast wird die optische Funktion nicht benötigt, sodass das lichtdurchlässige Element ohne Nachteile durch die Schutzeinrichtung abgedeckt werden kann.

Es versteht sich jedoch, dass die vorliegende Erfindung auch für beliebige andere Anwendungen eingesetzt werden kann, bei denen eine entsprechende druckabhängige Funktionstrennung in eine primär optische Funktion bei geringen Umgebungsdrücken und eine primär abdichtende Funktion bei hohen Umgebungsdrücken vorgenommen werden kann.

Bei dem ersten Druckniveau kann es sich grundsätzlich um ein beliebiges Druckniveau handeln. Bevorzugt ist die erfindungsgemäße optische Einrichtung für den Betrieb bis zu einem zulässigen maximalen Druckniveau ausgebildet. Das erste Druckniveau liegt dann bevorzugt unterhalb von 30% dieses zulässigen maximalen Druckniveaus. Vorzugsweise liegt das erste Druckniveau unterhalb von 20% des zulässigen maximalen Druckniveaus. Weiter vorzugsweise liegt es unterhalb von 10% des zulässigen maximalen Druckniveaus. Bevorzugt liegt das erste Druckniveau insbesondere unterhalb von 3 bar. Weiter vorzugsweise unterhalb von 2 bar. Hiermit lassen sich besonders vorteilhafte einfache Konfigurationen des lichtdurchlässigen Elements und der ersten Dichtungseinrichtung erzielen: Die vorstehenden Angaben gehen von einem Normaldruck im Innenraum des Gehäuses von etwa 1 bar aus. Es versteht sich, dass für die Auslegung des lichtdurchlässigen Elements und der ersten Dichtungseinrichtung der Differenzdruck zwischen dem Gehäuseinnenraum und der Umgebung des Gehäuses maßgeblich ist. Bei erhöhten Drücken im Gehäuseinnenraum können demgemäß auch das erste Druckniveau entsprechend höher liegen.

Die Schutzeinrichtung liegt in ihrer ersten Funktionsstellung bevorzugt derart dichtend am Gehäuse an, dass der Druck im Zwischenraum zwischen ihr und dem ersten Bereich des Gehäuses mit dem lichtdurchlässigen Element bei beliebigen Umgebungsdrücken das erste Druckniveau nicht überschreitet. Bevorzugt wird eine Abdichtung erzielt, welche unabhängig vom Umgebungsdruck ein annähernd gleich bleibendes Druckniveau in diesem Zwischenraum sicherstellt, um die mechanischen Belastungen, insbesondere die Wechselbelastungen, des lichtdurchlässigen Elements und der ersten Dichtungseinrichtung zu minimieren.

Die Schutzeinrichtung kann grundsätzlich beliebig gestaltet sein, um die Schutzfunktion in ihrer ersten Funktionsstellung zu erfüllen. Insbesondere können grundsätzlich beliebige Bewegungsabläufe für die Bewegung zwischen der ersten Funktionsstellung und der zweiten Funktionsstellung vorgesehen sein.

Bei bevorzugten, einfachen Ausgestaltungen der erfindungsgemäßen optischen Einrichtung ist vorgesehen, dass die Schutzeinrichtung schwenkbar am Gehäuse angeordnet ist. Sie kann beispielsweise als einfacher Deckel gestaltet sein, der derart schwenkbar am Gehäuse angeordnet ist, dass er in seiner ersten Funktionsstellung das lichtdurchlässige Element abdeckt.

Bei weiteren bevorzugten Varianten der erfindungsgemäßen optischen Einrichtung ist die Schutzeinrichtung verschieblich am Gehäuse angeordnet. Hierbei kann es sich beispielsweise um ein einfaches verschließbares Schott oder dergleichen handeln, welches in einem entsprechenden Rahmen vor das lichtdurchlässige Element geschoben wird, um dieses in der ersten Funktionsstellung vor dem Umgebungsdruck zu schützen. Hierbei versteht es sich, dass die Schutzeinrichtung dreh- und/oder längsverschieblich ausgebildet sein kann.

Bei besonders einfach gestalteten Varianten der erfindungsgemäßen optischen Einrichtung ist vorgesehen, dass das Gehäuse rohrförmig ausgebildet ist und die Schutzeinrichtung als das Gehäuse umgebender rohrförmiger Mantel ausgebildet ist. Dieser kann dann in einfacher Weise in axialer Richtung in seine erste Funktionsstellung verschoben werden.

Die Abdichtung zwischen der in der ersten Funktionsstellung befindlichen Schutzeinrichtung und dem Gehäuse kann grundsätzlich in beliebiger geeigneter Weise erfolgen. Bevorzugt ist wenigstens eine zweite Dichtungseinrichtung vorgesehen ist, die einen zweiten Dichtspalt zwischen dem Gehäuse und der in ihrer ersten Funktionsstellung befindlichen Schutzeinrichtung abdichtet. Die zweite Dichtungseinrichtung kann beispielsweise an der Schutzeinrichtung angeordnet sein. Bevorzugt ist die zweite Dichtungseinrichtung am Gehäuse angeordnet, um die bewegten Massen so gering wie möglich zu halten.

Zum Verfahren der Schutzeinrichtung zwischen ihrer ersten Funktionsstellung und ihrer zweiten Funktionsstellung kann grundsätzlich eine beliebige, geeignet gestaltete Antriebseinrichtung vorgesehen sein. Hierbei kann es sich beispielsweise um eine beliebige mechanische, elektrische oder hydraulische Antriebseinrichtung oder Kombinationen hiervon handeln. Bei bevorzugten Varianten der erfindungsgemäßen optischen Einrichtung umfasst die Schutzeinrichtung eine Antriebseinrichtung zum Verfahren der Schutzeinrichtung zwischen der ersten und zweiten Funktionsstellung, die zum automatischen Verfahren der Schutzeinrichtung in die erste Funktionsstellung bei Überschreiten eines vorgebbaren ersten Grenzwerts durch den Umgebungsdruck des Gehäuses ausgebildet ist. Der Umgebungsdruck kann dabei durch einen entsprechenden Sensor oder dergleichen erfasst und einer damit verbundenen Steuereinrichtung zugeführt werden, welche dann den Antrieb entsprechend ansteuert.

Hierbei versteht es sich, dass als Antriebseinrichtung auch eine Antriebseinrichtung dienen kann, zum Verfahren der optischen Einrichtung selbst vorgesehen ist, wie dies bei ausfahrbaren Sehrohren bzw. Optronikmasten in der Regel der Fall ist. Hierbei kann dann beispielsweise durch entsprechende mechanische Anschläge, Getriebe etc. sichergestellt sein, dass es in einer bestimmten Ausfahrstellung zum Verfahren der Schutzeinrichtung zwischen der ersten und zweiten Funktionsstellung kommt.

Um die schnelle Verfügbarkeit der optischen Funktion der erfindungsgemäßen optischen Einrichtung bei entsprechend niedrigen Drücken zu gewährleisten, ist bei weiteren vorteilhaften Varianten der erfindungsgemäßen optischen Einrichtung vorgesehen, dass die Schutzeinrichtung eine Antriebseinrichtung zum Verfahren der Schutzeinrichtung zwischen der ersten und zweiten Funktionsstellung umfasst, die zum automatischen Verfahren der Schutzeinrichtung in die zweite Funktionsstellung bei Unterschreiten eines vorgebbaren zweiten Grenzwerts durch den Umgebungsdruck des Gehäuses ausgebildet ist. Auch hier kann der Umgebungsdruck durch einen entsprechenden Sensor oder dergleichen erfasst und einer damit verbundenen Steuereinrichtung zugeführt werden, welche dann den Antrieb entsprechend ansteuert.

Je nach dem Einsatzbereich der optischen Einrichtung kann das lichtdurchlässige Element für beliebige Wellenlängen ausgelegt bzw. optimiert sein. Bei günstigen Varianten der optischen Einrichtung, die sich besonders für den Einsatz in Unterseebooten eignen, ist das lichtdurchlässige Element wenigstens für den Einsatz im Bereich des sichtbaren Lichts. Zusätzlich oder alternativ kann das lichtdurchlässige Element wenigstens für den Einsatz im Infrarotbereich, insbesondere im Bereich von Wellenlängen von 1 µm bis 15 µm, ausgebildet sein. Hierbei kann es insbesondere für den Einsatz im Bereich von Wellenlängen von 3 µm bis 5 µm und/oder im Bereich von Wellenlängen von 8 µm bis 12 µm ausgebildet sein.

Die vorliegende Erfindung betrifft weiterhin ein Sehrohr oder einen Optronikmast, insbesondere für ein Unterwasserfahrzeug, welches bzw. welcher eine erfindungsgemäße optische Einrichtung aufweist.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen
- Figur 1: eine schematische Schnittdarstellung einer bevorzugten Ausführungsform des erfindungsgemäßen Sehrohrs mit einer bevorzugten Ausführungsform der erfindungsgemäßen optischen Einrichtung;
- Figur 2: eine schematische Schnittdarstellung einer weiteren bevorzugten Ausführungsform eines erfindungsgemäßen Sehrohrs mit einer erfindungsgemäßen optischen Einrichtung;
- Figur 3: eine schematische Schnittdarstellung einer weiteren bevorzugten Ausführungsform eines erfindungsgemäßen Optronikmasts mit einer erfindungsgemäßen optischen Einrichtung;
- Figur 4: eine schematische Schnittdarstellung einer weiteren bevorzugten Ausführungsform eines erfindungsgemäßen Optronikmasts mit einer erfindungsgemäβen optischen Einrichtung.

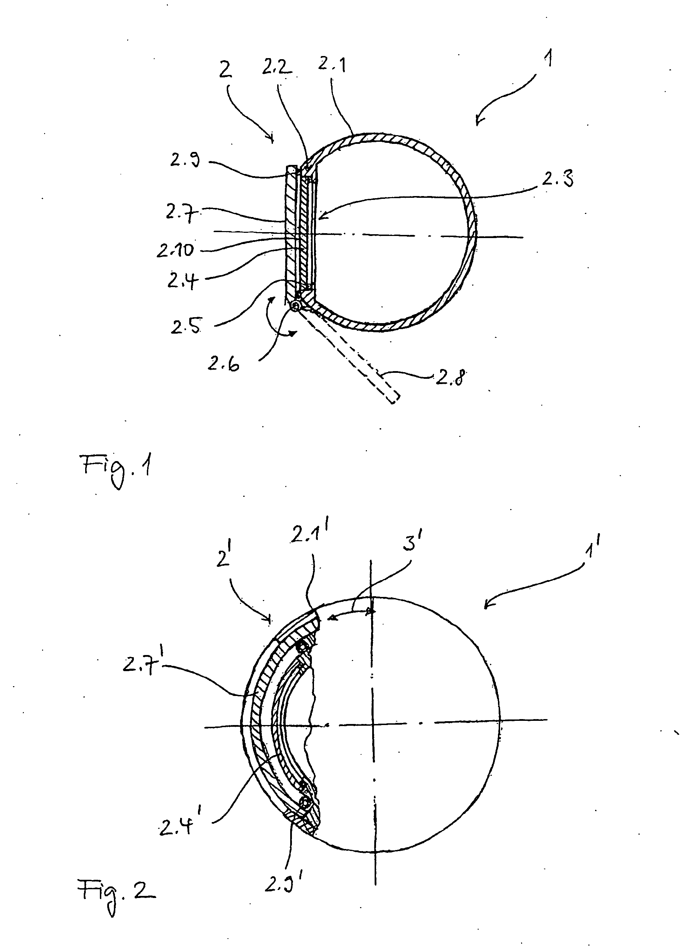

Figur 1 zeigt eine schematische Schnittdarstellung einer bevorzugten Ausführungsform des erfindungsgemäßen Sehrohrs 1 für ein Unterseeboot mit einer bevorzugten Ausführungsform der erfindungsgemäßen optischen Einrichtung 2, die am freien Ende, des Sehrohrs 1 angeordnet ist.

Die optische Einrichtung 1 umfasst ein Gehäuse 2.1 mit einem ersten Bereich 2.2, in dem eine fensterartige Ausnehmung 2.3 angeordnet ist. In diese Ausnehmung 2.3 ist ein lichtdurchlässiges Element in Form einer transparenten Scheibe 2.4 eingesetzt. Durch die Scheibe 2.4 kann Licht in den Innenraum des Gehäuses 2.1 fallen. Im Innenraum des Gehäuses schließt an die Scheibe 2.4 das - in Figur 1 nicht dargestellte - weitere optische System des Sehrohrs 1 an. Dieses optische System muss vor Feuchtigkeitseintritt geschützt werden.

Ein erster Dichtspalt zwischen der Scheibe 2.4 und dem Gehäuse 2.1 wird daher durch eine erste Dichtungseinrichtung in Form einer ersten Dichtung 2.5 abgedichtet. Durch die erste Dichtung wird mit anderen Worten der Innenraum des Gehäuses 2.1 gegenüber der Umgebung des Gehäuses 2.1 abgedichtet, in der ein bestimmter Umgebungsdruck herrscht.

Das Sehrohr 1 ist für den Betrieb bis zu einem zulässigen maximalen Druckniveau von 40 bar ausgebildet. Die Scheibe 2.4 und die erste Dichtung sind für ein erstes Druckniveau des Umgebungsdrucks von 2 bar ausgelegt. Das erste Druckniveau entspricht somit 5% des zulässigen maximalen Druckniveaus. Dank dieser Auslegung auf ein vergleichsweise niedriges Druckniveau sind sowohl die Scheibe 2.4 als auch die erste Dichtung 2.5 vergleichsweise einfach gestaltet. Insbesondere weist die Scheibe 2.4 eine relativ geringe Dikke auf. Dies wirkt sich vorteilhaft auf die optische Gesamtleistung des Systems aus, da dank der geringen Dicke der Scheibe 2.4 nur vergleichsweise geringe Absorptionsverluste und Abbildungsfehler auftreten.

Mit dieser Auslegung der Scheibe 2.4 und der ersten Dichtung 2.5 ist gewährleistet, dass diese oberhalb der Wasseroberfläche sowie in geringer Tiefe unterhalb der Wasseroberfläche alleine dem dort herrschenden Umgebungsdruck standhalten und die Abdichtung des Innenraums des Gehäuses 2.1 sicherstellen.

Um die Abdichtung des Innenraums des Gehäuses 2.1 auch in größeren Tiefen unter der Wasseroberfläche zu gewährleisten, ist eine Schutzeinrichtung in Form eines um eine Achse 2.6 schwenkbaren Deckels 2.7 vorgesehen. Der Deckel 2.7 wird durch einen- nicht dargestellten - Antrieb zwischen seiner dargestellten ersten Funktionsstellung und seiner durch die gestrichelte Kontur 2.8 angedeuteten zweiten Funktionsstellung verfahren. In seiner ersten Funktionsstellung deckt der Deckel 2.7 die Scheibe 2.4 ab, während er die Scheibe 2.4 in seiner zweiten Funktionsstellung frei gibt.

In seiner ersten Funktionsstellung deckt der Deckel 2.7 den ersten Bereich 2.2 des Gehäuses 2.1 mit der Scheibe 2.4 gegenüber der Umgebung dichtend ab. Hierzu liegt er an einer zweiten Dichtungseinrichtung in Form einer zweiten Dichtung 2.9 an, die an der Außenseite des Gehäuses 2.1 angeordnet ist. Der Deckel 2.7, sein Antrieb sowie seine Verriegelung und die Dichtung 2.9 sind so ausgelegt, dass unabhängig vom in der Umgebung des Gehäuses 2.1 herrschenden der Umgebungsdruck in dem Zwischenraum 2.10 zwischen dem Deckel 2.7 und dem ersten Bereich 2.2 des Gehäuses 2.1 höchstens ein Druck auf dem oben genannten ersten Druckniveau herrscht. Mit anderen Worten herrscht in diesem Zwischenraum 2.10 höchstens ein Druck von etwa 2 bar. Es versteht sich insbesondere, dass diese Komponenten so ausgelegt sein können, dass in dem Zwischenraum 2.10 unabhängig vom in der Umgebung des Gehäuses 2.1 herrschenden der Umgebungsdruck im Wesentlichen keine Druckänderung erfolgt.

Der Deckel 2.7 und der zugehörige Antriebsmechanismus sind so ausgelegt, dass sich der Deckel 2.7 bei Ausfall seines Antriebsmechanismus automatisch in seine erste Funktionsstellung bewegt, um in jedem Fall eine Beschädigung des optischen Systems bei Tauchfahrt zu vermeiden. Um auch in diesem Fall noch eine optische Notfunktion zu erzielen, kann der Deckel zumindest abschnittsweise aus entsprechend lichtdurchlässigem Material bestehen.

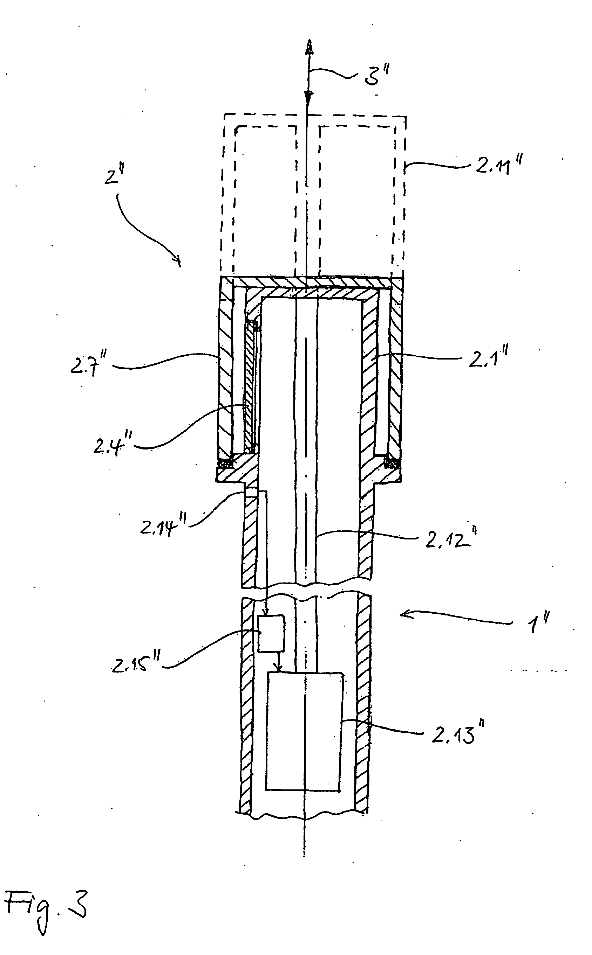

Figur 2 zeigt eine schematische Schnittdarstellung einer weiteren bevorzugten Ausführungsform eines erfindungsgemäßen Sehrohrs 1' für ein Unterseeboot mit einer weiteren bevorzugten Ausführungsform der erfindungsgemäßen optischen Einrichtung 2', die am freien Ende des Sehrohrs 1' angeordnet ist. Diese Ausführung gleicht in ihrer grundsätzlichen Funktionsweise und Auslegung derjenigen aus Figur 1, sodass hier nur auf die Unterschiede eingegangen werden soll.

Ein Unterschied besteht darin, dass die Schutzeinrichtung als verschiebliches Schott 2.7' ausgebildet ist, welches im Gehäuse 2.1' gelagert ist und in Richtung des Doppelpfeils 3' zwischen der dargestellten ersten Funktionsstellung, in der es die Scheibe 2.4' abdeckt, und der - nicht dargestellten - zweiten Funktionsstellung verfahren werden kann, in der es die Scheibe 2.4' frei gibt.

Ein weiterer Unterschied besteht darin, dass es sich bei der zweiten Dichtung 2.9' um eine Hohlkammerdichtung handelt, die von Innen mit Druck beaufschlagt werden kann, um die Dichtwirkung sicherzustellen.

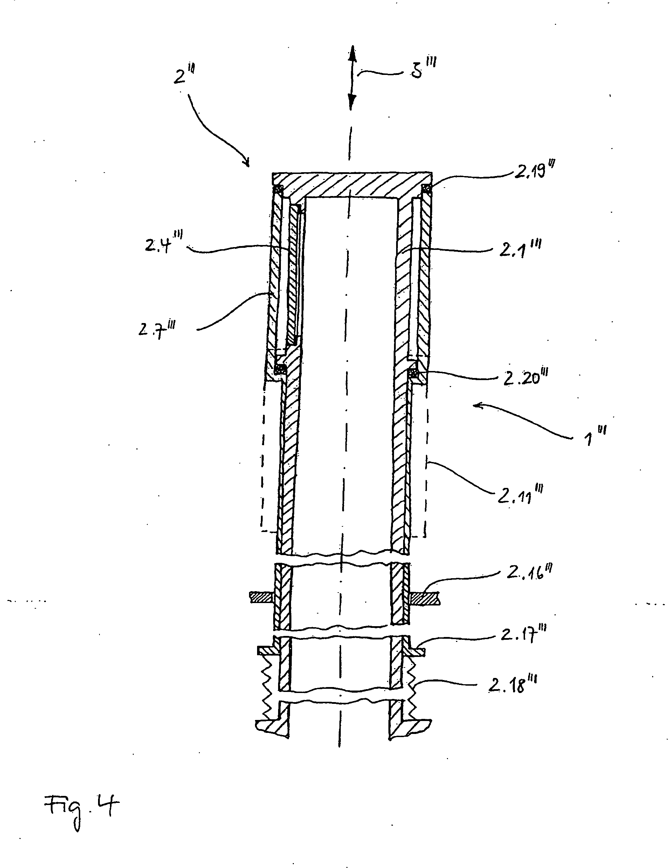

Figur 3 zeigt eine schematische Schnittdarstellung einer weiteren bevorzugten Ausführungsform eines erfindungsgemäßen Optronikmasts 1" für ein Unterseeboot mit einer weiteren bevorzugten Ausführungsform der erfindungsgemäßen optischen Einrichtung 2", die am freien Ende des Optronikmasts 1" angeordnet ist. Diese Ausführung gleicht in ihrer grundsätzlichen Funktionsweise und Auslegung ebenfalls derjenigen aus Figur 1, sodass auch hier nur auf die Unterschiede eingegangen werden soll.

Ein Unterschied besteht darin, dass die Schutzeinrichtung als rohrförmiger Mantel in Form einer rohrförmigen Kappe 2.7" ausgebildet ist, die das rohrförmige Gehäuse 2.1" in der ersten Funktionsstellung umgibt. Die Kappe kann in Richtung des Doppelpfeils 3" zwischen der dargestellten ersten Funktionsstellung, in der sie die Scheibe 2.4" abdeckt, und der durch die gestrichelte Kontur 2.11" angedeuteten zweiten Funktionsstellung verfahren werden, in der sie die Scheibe 2.4" frei gibt.

Die Kappe 2.7" wird über am Innenumfang des Gehäuses 2.1 verlaufende Zug-Druck-Stangen 2.12" durch einen Motor 2.13" verfahren. Im Gehäuse 2.1" ist ein Drucksensor 2.14" angeordnet, der den Umgebungsdruck erfasst und ein entsprechendes Signal an die mit ihm verbundene Steuerung 2.15" des Motors 2.13" weitergibt. Die Steuerung 2.15" ist so ausgebildet, dass sie den Motor 2.13" zum Verfahren der Kappe 2.7" in ihre erste Funktionsstellung veranlasst, sobald der Umgebungsdruck einen ersten Grenzwert überschreitet. Die Steuerung 2.15" ist weiterhin so ausgebildet, dass sie den Motor 2.13" zum Verfahren der Kappe 2.7" in ihre zweite Funktionsstellung veranlasst, sobald der Umgebungsdruck einen zweiten Grenzwert unterschreitet.

Der erste Grenzwert richtet sich dabei nach der Geschwindigkeit des zu erwartenden Druckanstiegs. Je nach der zu erwartenden Druckanstiegsgeschwindigkeit und der zum Verfahren der Kappe in die erste Funktionsstellung erforderlichen Zeit liegt er mehr oder weniger weit unterhalb des ersten Druckniveaus, um sicherzustellen, dass sich die Kappe rechtzeitig in ihrer ersten Funktionsstellung befindet, bevor der Umgebungsdruck das erste Druckniveau überschreitet.

Der erste Grenzwert kann insbesondere variabel sein. So kann er von aktuellen Zustandsparametern des Unterseebootes, wie beispielsweise der aktuellen Sinkgeschwindigkeit etc., abhängen. Ebenso kann er anhand einer Druckverlaufsprognose variiert werden, die aus den von dem Drucksensor 2.14" gelieferten Werten erstellt wird.

Bei dem zweiten Grenzwert kann es sich um einen festen Wert handeln. Der zweite Grenzwert kann aber auch in ähnlicher Weise wie der erste Grenzwert definiert sein. So kann er sich nach der Geschwindigkeit des zu erwartenden Druckabfalls richten. Je nach der zu erwartenden Druckabfallsgeschwindigkeit und der zum Verfahren der Kappe in die zweite Funktionsstellung erforderlichen Zeit liegt er mehr oder weniger weit unterhalb des ersten Druckniveaus, um sicherzustellen, dass sich die Kappe rechtzeitig in ihrer zweiten Funktionsstellung befindet, wenn oder bevor die Wasseroberfläche erreicht wird.

Auch der zweite Grenzwert kann variabel sein. So kann er von aktuellen Zustandsparametern des Unterseebootes, wie beispielsweise der aktuellen Steiggeschwindigkeit etc., abhängen. Ebenso kann er anhand einer Druckverlaufsprognose variiert werden, die aus den von dem Drucksensor 2.14" gelieferten Werten erstellt wird.

Figur 4 zeigt eine schematische Schnittdarstellung einer weiteren bevorzugten Ausführungsform eines erfindungsgemäßen Optronikmasts 1"' für ein Unterseeboot mit einer weiteren bevorzugten Ausführungsform der erfindungsgemäßen optischen Einrichtung 2"', die am freien Ende des Optronikmasts 1"' angeordnet ist. Diese Ausführung gleicht in ihrer grundsätzlichen Funktionsweise und Auslegung derjenigen aus Figur 3, sodass auch hier nur auf die Unterschiede eingegangen werden soll.

Der Unterschied besteht darin, dass die Schutzeinrichtung als rohrförmiger Mantel 2.7'" ausgebildet ist, der das rohrförmige Gehäuse 2.1'" sowohl in der ersten als auch der zweiten Funktionsstellung umgibt. Der Mantel 2.7'" kann in Richtung des Doppelpfeils 3'" zwischen der dargestellten ersten Funktionsstellung, in der er die Scheibe 2.4"' abdeckt, und der durch die gestrichelte Kontur 2.11"' angedeuteten zweiten Funktionsstellung verfahren werden, in der er die Scheibe 2.4'" frei gibt.

Ein weiterer Unterschied besteht darin, dass als Antriebseinrichtung für den rohrförmigen. Mantel 2.7"' die Antriebseinrichtung dient, mittels derer der Optronikmasts 1'" zwischen einer eingefahrenen Ruhestellung und einer ausgefahrenen Betriebsstellung bezüglich des Unterseebootes verfahren wird. Hierbei kommt es beim Ausfahren des Optronikmasts 1'" ab einer vorgegebenen ersten Ausfahrstellung des Optronikmasts 1 "' zum Verfahren des Mantels 2.7"' aus der dargestellten ersten Funktionsstellung in die durch die gestrichelte Kontur 2.11"' angedeutete zweiten Funktionsstellung.

Dies wird durch bezüglich des rohrförmigen Gehäuses 2.1'" und des Optronikmasts 1"' feststehende mechanische erste Anschläge 2.16"' erzielt. Die ersten Anschläge 2.16"' gelangen in der ersten Ausfahrstellung des Optronikmasts 1'" mit zweiten Anschlägen 2.17"' des Mantels 2.7"' in Eingriff. Hierdurch wird der Mantel 2.7"' zurückgehalten, während das rohrförmige Gehäuse 2.1"' weiter ausgefahren wird. Beim Einfahren des Optronikmasts 1'" stellen - in Figur 4 nur schematisch angedeutete - längenveränderliche Rückstellelemente 2.18"' sicher, dass sich der Mantel 2.7"' wieder in seine erste Funktionsstellung zurück bewegt. Die Rückstellelemente 2.18"' tragen hierbei auch maßgeblich zum Anpressdruck des Mantels 2.7"' an den Dichtungen 2.19"' und 2.20"' bei.

Die Ansteuerung der Schutzeinrichtung erfolgt bei dieser Variante mit anderen Worten automatisch mit der Ansteuerung zum Ausfahren bzw. Einfahren des Optronikmasts 1'". Diese kann einfach durch einen entsprechenden zu betätigenden Schalter oder dergleichen erfolgen. Ebenso kann hier auch wieder eine druck- oder tauchtiefenabhängige Sicherungsschaltung vorgesehen sein, die das rechtzeitige Verfahren des Mantels 2.7"' zwischen der ersten und der zweiten Funktionsstellung sicherstellt, indem das vollständige Ausfahren des Optronikmasts 1'" nur bei bestimmten zu erwartenden Drücken im Bereich der Scheibe 2.4'" möglich ist, die unterhalb des ersten Druckniveaus liegen.

Durch diese Konfiguration mit dem das Gehäuse 2.1"' sowohl in der ersten als auch der zweiten Funktionsstellung umgebenden Mantel 2.7"' ergibt-sich bei geringem Platzbedarf eine besonders robuste Konstruktion.

Bei allen vorstehend beschriebenen Beispielen der erfindungsgemäßen optischen Einrichtung ist die Scheibe, also das lichtdurchlässige Element, für den Einsatz im Bereich des sichtbaren Lichts und im Infrarotbereich, insbesondere im Bereich von Wellenlängen von 1 µm bis 10 µm, ausgebildet. Es versteht sich jedoch, dass das lichtdurchlässige Element bei anderen Varianten der Erfindung auch für andere Wellenlängenbereiche optimiert sein kann.

## Patentansprüche

1. Optische Einrichtung für den Einsatz unter stark wechselndem Umgebungsdruck, insbesondere für ein Sehrohr oder einen Optronikmast, mit einem Gehäuse (2.1; 2.1'; 2.1"; 2.1"'), einem ersten Bereich (2.2), in dem ein lichtdurchlässiges Element (2.4; 2.4'; 2.4"; 2.4'") im Bereich einer Ausnehmung (2.3) des Gehäuses (2.1; 2.1': 2.1"; 2.1"') angeordnet ist, und einer einen ersten Dichtspalt zwischen dem lichtdurchlässigen Element (2.4; 2.4'; 2.4"; 2.4"') und dem Gehäuse (2.1; 2.1'; 2.1"; .2.1"') abdichtenden ersten Dichtungseinrichtung (2.5), die zum Abdichten des Innenraumes des Gehäuses (2.1; 2.1'; 2.1"; 2.1"') gegenüber der Umgebung des Gehäuses (2.1; 2.1'; 2.1"; 2.1''') bis zu einem ersten Druckniveau ausgebildet ist, **dadurch gekennzeichnet, dass** eine von einer ersten Funktionsstellung in eine zweite Funktionsstellung bewegliche Schutzeinrichtung (2.7; 2.7'; 2.7"; 2.7"') vorgesehen ist,
- die außerhalb des Gehäuses (2.1; 2.1'; 2.1"; 2.1"') angeordnet ist,
- die in ihrer ersten Funktionsstellung den ersten Bereich (2.2) derart dichtend gegenüber der Umgebung des Gehäuses (2.1; 2.1 '; 2.1"; 2.1 "') abdeckt, dass bei einem Umgebungsdruck oberhalb des ersten Druckniveaus in einem Zwischenraum (2.10) zwischen der Schutzeinrichtung (2.7; 2.7'; 2.7"; 2.7"') und dem ersten Bereich (2.2) höchstens das erste Druckniveau vorherrscht, und
- die in ihrer zweiten Funktionsstellung das lichtdurchlässige Element (2.4; 2.4'; 2.4"; 2.4"') freigibt.

2. Optische Einrichtung nach Anspruch 1, **dadurch gekennzeichnet, dass** das sie für den Betrieb bis zu einem zulässigen maximalen Druckniveau ausgebildet ist und das erste Druckniveau unterhalb von 30% des zulässigen maximalen Druckniveaus, vorzugsweise unterhalb von 20% des zulässigen maximalen Druckniveaus, weiter vorzugsweise unterhalb von 10% des zulässigen maximalen Druckniveaus, liegt.

3. Optische Einrichtung nach Anspruch 1 oder 2, **dadurch gekennzeichnet, dass** das erste Druckniveau unterhalb von 3 bar, vorzugsweise unterhalb von 2 bar, liegt.

4. Optische Einrichtung nach einem der vorhergehenden Ansprüche, **dadurch gekennzeichnet, dass** die Schutzeinrichtung (2.7) schwenkbar am Gehäuse (2.1) angeordnet ist...

5. Optische Einrichtung nach einem der vorhergehenden Ansprüche, **dadurch gekennzeichnet, dass** die Schutzeinrichtung (2.7'; 2.7"; 2.7"') verschieblich am Gehäuse (2.1'; 2.1"; 2.1"') angeordnet ist.

6. Optische Einrichtung nach Anspruch 5, **dadurch gekennzeichnet, dass** das Gehäuse (2.1 "; 2.1"') rohrförmig ausgebildet ist und die Schutzeinrichtung (2.7"; 2.7"') als das Gehäuse (2.1"; 2.1"') umgebender rohrförmiger Mantel ausgebildet ist.

7. Optische Einrichtung nach einem der vorhergehenden Ansprüche, **dadurch gekennzeichnet, dass** wenigstens eine zweite Dichtungseinrichtung (2.9; 2.9') vorgesehen ist, die einen zweiten Dichtspalt zwischen dem Gehäuse (2.1; 2.1') und der in ihrer ersten Funktionsstellung befindlichen Schutzeinrichtung (2.7; 2.7") abdichtet, wobei die zweite Dichtungseinrichtung (2.9; 2.9') insbesondere am Gehäuse (2.1; 2.1') angeordnet ist.

8. Optische Einrichtung nach einem der vorhergehenden Ansprüche, **dadurch gekennzeichnet, dass** die Schutzeinrichtung (2.7") eine Antriebseinrichtung (2.12", 2.13", 2.14", 2.15") zum Verfahren der Schutzeinrichtung (2.7") zwischen der ersten und zweiten Funktionsstellung umfasst, die zum automatischen Verfahren der Schutzeinrichtung (2.7") in die erste Funktionsstellung bei Überschreiten eines vorgebbaren ersten Grenzwerts durch den Umgebungsdruck des Gehäuses (2.1 ") ausgebildet ist.

9. Optische Einrichtung nach einem der vorhergehenden Ansprüche, **dadurch gekennzeichnet, dass** die Schutzeinrichtung (2.7") eine Antriebseinrichtung (2.12", 2.13", 2.14". 2.15") zum Verfahren der Schutzeinrichtung (2.7") zwischen der ersten und zweiten Funktionsstellung umfasst, die zum automatischen Verfahren der Schutzeinrichtung (2.7") in die zweite Funktionsstellung bei Unterschreiten eines vorgebbaren zweiten Grenzwerts durch den Umgebungsdruck des Gehäuses (2.1") ausgebildet ist.

10. Optische Einrichtung nach einem der vorhergehenden Ansprüche, **dadurch gekennzeichnet, dass** das lichtdurchlässige Element (2.4; 2.4'; 2.4"; 2.4'") wenigstens für den Einsatz im Bereich des sichtbaren Lichts und/oder im Infrarotbereich, insbesondere im Bereich von Wellenlängen von 1 µm bis 15 µm, ausgebildet ist.

11. Sehrohr oder Optronikmast, insbesondere für ein Unterwasserfahrzeug, mit einer optischen Einrichtung (2; 2'; 2"; 2"') nach einem der vorhergehenden Ansprüche.

## Claims

1. An optical device for use under significantly varying ambient pressure, particularly for a periscope or an optronics mast, with a housing (2.1; 2.1'; 2.1"; 2.1"'), a first region (2.2), in which a transparent element (2.4; 2.4'; 2.4"; 2.4"') is arranged in the region of a recess (2.3) of the housing (2.1; 2.1'; 2.1"; 2.1"'), and a first sealing device (2.5) that seals a first sealing gap between the transparent element (2.4; 2.4'; 2.4"; 2.4"') and the housing (2.1; 2.1'; 2.1 "; 2.1'") and is designed for sealing the interior of the housing (2.1; 2.1'; 2.1"; 2.1'") relative to the surroundings of the housing (2.1; 2.1'; 2.1"; 2.1'") up to a first pressure level, **characterized in that** a protection apparatus (2.7; 2.7'; 2.7"; 2.7"') is provided that can be displaced from a first functional position into a second functional position, wherein the protection apparatus
- is arranged outside the housing (2.1; 2.1'; 2.1"; 2.1"'),
- covers and seals the first region (2.2) relative to the surroundings of the housing (2.1; 2.1'; 2.1"; 2.1"') in its first functional position in such a way that the pressure in an intermediate space (2.10) between the protection apparatus (2.7; 2.7'; 2.7"; 2.7"') and the first region (2.2) is not higher than the first pressure level if the ambient pressure exceeds the first pressure level, and
- exposes the transparent element (2.4; 2.4'; 2.4"; 2.4"') in its second functional position.

2. The optical device according to claim 1, **characterized in that** it is designed for use up to a permissible maximum pressure level, and **in that** the first pressure level lies below 30% of the permissible maximum pressure level, preferably below 20% of the permissible maximum pressure level, further preferably below 10% of the permissible maximum pressure level.

3. The optical device according to claim 1 or 2, **characterized in that** the first pressure level lies below 3 bar, preferably below 2 bar.

4. The optical device according to any one of the preceding claims, **characterized in that** the protection apparatus (2.7) is pivotably arranged on the housing (2.1).

5. The optical device according to any one of the preceding claims, **characterized in that** the protection apparatus (2.7'; 2.7"; 2.7"') is displaceably arranged on the housing (2.1'; 2.1 "; 2.1"').

6. The optical device according to claim 5, **characterized in that** the housing (2.1 "; 2.1'") is realized in a tubular fashion and the protection apparatus (2.7"; 2.7"') is realized in the form of a tubular shell that surrounds the housing (2.1 "; 2.1"').

7. The optical device according to any one of the preceding claims, **characterized in that** at least a second sealing device (2.9; 2.9') is provided for sealing a second sealing gap between the housing (2.1; 2.1') and the protection apparatus (2.7; 2.7") situated in its first functional position, wherein the second sealing device (2.9; 2.9') is arranged, in particular, on the housing (2.1; 2.1').

8. The optical device according to any one of the preceding claims, **characterized in that** the protection apparatus (2.7") comprises a drive apparatus (2.12", 2.13", 2.14", 2.15") for displacing the protection apparatus (2.7") between the first and the second functional position, wherein said drive is designed for automatically displacing the protection apparatus (2.7") into the first functional position when the ambient pressure of the housing (2.1") exceeds a first predetermined threshold value.

9. The optical device according to any one of the preceding claims, **characterized in that** the protection apparatus (2.7") comprises a drive apparatus (2.12", 2.13", 2.14", 2.15") for displacing the protection apparatus (2.7") between the first and the second functional position, wherein said drive is designed for automatically displacing the protection apparatus (2.7") into the second functional position when the ambient pressure of the housing (2.1 ") falls short of a second predetermined threshold value.

10. The optical device according to any one of the preceding claims, **characterized in that** the transparent element (2.4; 2.4'; 2.4"; 2.4"') is designed at least for use in the visible light range and/or the infrared range, particularly in the wavelength range between 1 µm and 15 µm.

11. A periscope or an optronics mast, particularly for a submarine, with an optical device (2; 2'; 2"; 2"') according to any one of the preceding claims.

## Revendications

1. Dispositif optique destiné à être utilisé sous une pression environnante fortement fluctuante, notamment pour un périscope ou un mât optronique, avec un boîtier (2.1 ; 2.1' ; 2.1 " ; 2.1"'), une première zone (2.2) dans laquelle un élément transparent (2.4 ; 2.4' ; 2.4" ; 2.4"') est disposé dans la zone d'une découpure (2.3) du boîtier (2.1 ; 2.1' ; 2.1"; 2.1"') et avec un premier dispositif d'étanchéité (2.5) assurant l'étanchéité d'un premier interstice d'étanchéité entre l'élément transparent (2.4 ; 2.4' ; 2.4" ; 2.4"') et le boîtier (2.1 ; 2.1' ; 2.1" ; 2.1"'), qui est conçu pour assurer l'étanchéité de l'intérieur du boîtier (2.1 ; 2.1' ; 2.1" ; 2.1"') par rapport à l'environnement du boîtier (2.1 ; 2.1' ; 2.1" ; 2.1"') jusqu'à un premier niveau de pression, **caractérisé en ce qu'**il est prévu un dispositif de protection (2.7 ; 2.7' ; 2.7" ; 2.7"') mobile d'une première position fonctionnelle dans une deuxième position fonctionnelle, ce dispositif de protection
- étant est disposé à l'extérieur du boîtier (2.1 ; 2.1' ; 2.1"; 2.1"'),
- dans sa première position fonctionnelle recouvrant la première zone (2.2) de façon étanche par rapport à l'environnement du boîtier (2.1 ; 2.1' ; 2.1" ; 2.1"'), de façon à ce que lorsque la pression environnante est supérieure au premier niveau de pression, au maximum le premier niveau de pression prédomine dans un espace intermédiaire (2.10) entre le dispositif de protection (2.7 ; 2.7' ; 2.7" ; 2.7"') et la première zone (2.2) et
- dans sa deuxième position fonctionnelle rendant libre l'élément transparent (2.4 ; 2.4' ; 2.4" ; 2.4"').

2. Dispositif optique selon la revendication 1, **caractérisé en ce qu'**il est conçu pour fonctionner jusqu'à un niveau de pression maximal autorisé et **en ce que** le premier niveau de pression est inférieur à 30 % du niveau de pression maximal autorisé, de préférence inférieur à 20% du niveau de pression maximal autorisé, de façon plus préférée inférieur à 10 % du niveau de pression maximal autorisé.

3. Dispositif optique selon la revendication 1 ou 2, **caractérisé en ce que** le premier niveau de pression est inférieur à 3 bar, de préférence inférieur à 2 bar.

4. Dispositif optique selon l'une quelconque des revendications précédentes, **caractérisé en ce que** le dispositif de protection (2.7) est disposé de façon pivotable sur le boîtier (2.1).

5. Dispositif optique selon l'une quelconque des revendications précédentes, **caractérisé en ce que** le dispositif de protection (2.7 ; 2.7' ; 2.7" ; 2.7"') est disposé de façon déplaçable sur le boîtier (2.1 ; 2.1' ; 2.1" ; 2.1"').

6. Dispositif optique selon la revendication 5, **caractérisé en ce que** le boîtier (2.1" ; 2.1"') est conçu sous forme tubulaire et **en ce que** le dispositif de protection (2.7" ; 2.7"') est conçu sous la forme d'une enveloppe tubulaire entourant le boîtier (2.1" ; 2.1'").

7. Dispositif optique selon l'une quelconque des revendications précédentes, **caractérisé en ce qu'**il est prévu au moins un deuxième dispositif d'étanchéité (2.9 ; 2.9'), assurant l'étanchéité d'un deuxième interstice d'étanchéité entre le boîtier (2.1" ; 2.1 "') et le dispositif de protection (2.7 ; 2.7") se trouvant dans sa première position fonctionnelle, le deuxième dispositif de d'étanchéité (2.9 ; 2.9') étant notamment disposé sur le boîtier (2.1 ; 2.1').

8. Dispositif optique selon l'une quelconque des revendications précédentes, **caractérisé en ce que** le dispositif de protection (2.7") comprend un dispositif d'entraînement (2.12", 2.13", 2.14", 2.15") pour déplacer le dispositif de protection (2.7") entre la première et la deuxième position fonctionnelle, qui est conçu pour déplacer automatiquement le dispositif de protection (2.7") dans la première position fonctionnelle en cas que la pression environnante du boîtier (2.1 ") dépasse une première valeur limite prédéfinissable.

9. Dispositif optique selon l'une quelconque des revendications précédentes, **caractérisé en ce que** le dispositif de protection (2.7") comprend un dispositif d'entraînement (2.12", 2.13", 2.14", 2.15") pour déplacer le dispositif de protection (2.7") entre la première et la deuxième position fonctionnelle, qui est conçu pour déplacer automatiquement le dispositif de protection (2.7") dans la deuxième position fonctionnelle en cas que la pression environnante du boîtier (2.1 ") tombe en dessous d'une deuxième valeur limite prédéfinissable.

10. Dispositif optique selon l'une quelconque des revendications précédentes, **caractérisé en ce que** l'élément transparent (2.4 ; 2.4' ; 2.4" ; 2.4"') est conçu au moins pour être utilisé au niveau de la lumière visible et/ou au niveau infrarouge, notamment au niveau de longueurs d'ondes de 1 µm à 15 µm.

11. Périscope ou mât optronique, notamment pour un véhicule sous-marin, avec un dispositif optique (2 ; 2' ; 2" ; 2"') selon l'une quelconque des revendications précédentes.
